# EUROPEAN PATENT APPLICATION

(11) **EP 4 725 661 A1**
(43) Date of publication of application: **15.04.2026**
(21) Application number: 25206126.2
(22) Date of filing: 01.10.2025
(51) Int. Cl.: B25J 19/00, B25J 9/12

(54) **ELECTRICAL TRANSMISSION THROUGH RECONFIGURED CLOCKSPRING**

(30) Priority: 14.10.2024 US 202418914568
(71) Applicant: Tesla, Inc., Austin, TX 78725 (US)
(72) Inventor: TAI, Albert, Austin, TX 78725 (US); JASPERSON, Huntington, Austin, TX 78725 (US); O'CALLAGHAN, William, Austin, TX 78725 (US); PRATT, Carson, Austin, TX 78725 (US)
(74) Representative: Liesegang, Eva

(57) **Abstract**

An actuator assembly or a revolute joint for a device includes a rotating portion, a fixed portion, and a clockspring. The rotating portion is configured to interface the fixed portion. The fixed portion and the rotating portion structurally form a space that is at least partially surrounded by the fixed portion and the rotating portion. The clockspring is shaped to fit into the space, and is configured to transmit at least an electrical power signal or a data signal from the rotating portion to the fixed portion.

## Description

### TECHNICAL FIELD

The present disclosure relates to systems and methods for signal and/or power transmission. More particularly, some embodiments of the present disclosure relate to assemblies and mechanisms such as actuators or revolute joints that utilize one or more clocksprings for transmitting power or signals.

### BACKGROUND

Mechanisms have been utilized to transmit signals between various components of a system. For example, clocksprings can be used to transmit electrical signals between a steering wheel and a steering column by coiling and uncoiling a cable that is attached to each moving component. Such mechanisms may allow for the transmission of power and signals through the rotational movement of the steering wheel, ensuring continuous electrical connectivity. However, traditional clocksprings are bulky in size or geometry, and may be ill-suited for compact integration.

Other existing solutions for signal or power transmissions, such as slip rings or dynamic round wire bundles, often involve the use of various mechanical and electrical interfaces. Yet, these solutions are either significantly more expensive than clocksprings or can operate only under much lower cycle counts as compared to clocksprings.

### SUMMARY

In some aspects, the techniques described herein relate to an actuator assembly for a device, the actuator assembly including: a rotating portion configured to interface a fixed portion; the fixed portion, wherein the fixed portion and the rotating portion structurally form a space that is at least partially surrounded by the fixed portion and the rotating portion; a clockspring configured to transmit at least an electrical power signal or data signal from the rotating portion to the fixed portion, wherein the clockspring is shaped to fit into the space.

In some aspects, the techniques described herein relate to a method for signal or power transmission associated with an actuator or a revolute joint assembly that includes a moving portion, a fixed portion, and a clockspring that is disposed between the moving portion and the fixed portion, the method including: rotating the moving portion from a first to a second degree, which causes the clockspring to transition from a first position to a second position, wherein the moving portion and the fixed portion are continuously electrically connected with each other through the clockspring.

In some aspects, the techniques described herein relate to a method, wherein the clockspring continuously transmits electrical power signals or data signals between the moving portion and the fixed portion when the clockspring transitions among the continuous positions.

In some aspects, the techniques described herein relate to a clockspring assembly, wherein the clockspring is made of one or more flat flexible cables (FFCs) or flexible circuits.

In some aspects, the techniques described herein relate to a clockspring assembly, wherein at least a portion of the clockspring corresponds to a cylindrical shape.

In some aspects, the techniques described herein relate to a clockspring assembly, wherein the conductors in the clockspring are geometrically configured or electrically shielded to facilitate impedance matching or electromagnetic interference (EMI) protection for the electrical circuit in the clockspring.

In some aspects, the techniques described herein relate to an actuator assembly, wherein the rotating portion is a rotor and the fixed portion is a stator.

In some aspects, the techniques described herein relate to an actuator assembly, wherein a clockspring is concealed from view from outside the actuator assembly.

In some aspects, the techniques described herein relate to an actuator assembly, wherein a clockspring is electrically terminated to a motor controller inside the actuator assembly.

In some aspects, the techniques described herein relate to an actuator assembly, wherein a signal is generated by an electrical device that is mounted on the rotating portion, and wherein a clockspring transmits the signal from the device to a controller mounted on the fixed portion.

In some aspects, the techniques described herein relate to a first actuator assembly, wherein a clockspring is configured to transmit electrical power signals or data signals from either the fixed portion or the rotating portion of the first actuator assembly to a second actuator assembly.

In some aspects, the techniques described herein relate to a first actuator assembly, wherein an integrated clockspring is electrically connected to a second actuator assembly through an intermediate pin-and-socket connection, edge card connection, or jumper wire.

In some aspects, the techniques described herein relate to a method, further including: attaching a magnet to a portion of a clockspring assembly fixed to the moving portion of an actuator, sensing the position of the magnet with a controller disposed on the fixed portion of the actuator as the clockspring transitions between continuous positions, and deducing the position of the moving portion of the actuator from the positional data obtained.

In some aspects, the techniques described herein relate to one or more actuator assemblies implementing clocksprings, wherein the actuator assembly or assemblies form a portion of a limb of a robot.

In some aspects, the techniques described herein relate to a hinge implementing a clockspring, wherein the hinge attaches a door or a liftgate in a vehicle.

### BRIEF DESCRIPTION OF THE DRAWINGS

Embodiments of the present disclosure are described with reference to the accompanying drawings, in which like reference characters reference like elements, and wherein:
FIG. 1A illustrates a perspective view of an example clockspring assembly according to some embodiments of the present disclosure.
FIG. 1B illustrates another perspective view of the example clockspring assembly of FIG. 1A in accordance with some embodiments of the present disclosure.
FIG. 1C illustrates an exploded view of the example clockspring assembly of FIG. 1A in accordance with some embodiments of the present disclosure.
FIG. 2A illustrates example movements associated with the example clockspring assembly of FIG. 1A in accordance with some embodiments of the present disclosure.
FIG. 2B illustrates example movements associated with a conventional clockspring assembly.
FIG. 3 illustrates example movements associated with the example clockspring assembly of FIG. 1A in accordance with some embodiments of the present disclosure.
FIG. 4A shows an enlarged view of an example implementation of a portion of a clockspring used by the example clockspring assembly of FIG. 1A according to some embodiments of the present disclosure.
FIG. 4B shows a cross-sectional view of the portion of the clockspring of FIG. 4A according to some embodiments of the present disclosure.
FIG. 4C shows an enlarged view of an example implementation of a portion of a clockspring used by the example clockspring assembly of FIG. 1A according to some embodiments of the present disclosure.
FIG. 4D shows a cross-sectional view of the portion of the clockspring of FIG. 4C according to some embodiments of the present disclosure.
FIGS. 5A, 5B, 5C, and 5D illustrate various example implementations for electrical termination of a clockspring assembly in accordance with some embodiments of the present disclosure.
FIG. 6A shows a cross-sectional view illustrating an example integration of a clockspring assembly in actuator assemblies according to some embodiments of the present disclosure.
FIG. 6B shows an exploded view of an example actuator assembly of FIG. 6A according to some embodiments of the present disclosure.
FIGS. 7A, 7B, 8A, and 8B show exploded and perspective views of example integration in actuator assemblies according to some embodiments of the present disclosure.
FIG. 9 shows a cross-sectional view illustrating an example integration in actuator assemblies of FIG. 8B according to some embodiments of the present disclosure.
FIG. 10 shows a cross-sectional view illustrating an actuator assembly that includes the example clockspring assembly of FIGS. 1A and 1B and other components according to some embodiments of the present disclosure.
FIG. 11A depicts a block diagram representative of conventional electrical connections between actuator assemblies using an external wire harness.
FIG. 11B depicts block diagrams representative of connections between actuator assemblies of FIGS. 7A and 7B according to some embodiments of the present disclosure.
FIG. 11C depicts block diagrams representative of connections between actuator assemblies of FIGS. 8A and 8B according to some embodiments of the present disclosure.
FIG. 12 illustrates an example application of a clockspring assembly in an automotive door hinge assembly according to some embodiments of the present disclosure.
FIG. 13 depicts cross-sectional views of various clockspring assemblies according to some embodiments of the present disclosure in comparison to current art.

### DETAILED DESCRIPTION

Although several embodiments, examples, and illustrations are disclosed below, it will be understood by those of ordinary skill in the art that the disclosure described herein extends beyond the specifically disclosed embodiments, examples, and illustrations and includes other uses of the disclosure and obvious modifications and equivalents thereof. Embodiments are described with reference to the accompanying figures, wherein like numerals refer to like elements throughout. The terminology used in the description presented herein is not intended to be interpreted in any limited or restrictive manner simply because it is being used in conjunction with a detailed description of some specific embodiments of the disclosure. In addition, embodiments can comprise several novel features. No single feature is solely responsible for its desirable attributes or is essential to practicing the disclosure herein described.

Generally described, one or more aspects of the present disclosure relate to systems and methods that employ one or more clocksprings as a transmission harness. In some embodiments, the clockspring is arranged so as to be hidden from view. More specifically, some embodiments of the present disclosure disclose mechanisms and assemblies that utilize clocksprings with reconfigured geometry suitable for fitting into existing empty spaces inside one or more components of a device (e.g., a robotic actuator or joint; vehicle door or liftgate hinge) to transmit electrical signals and/or power. In some embodiments, the clockspring can be compactly integrated into an internal space of an actuator (e.g., a rotary actuator) of a robot to facilitate communication between components (e.g., rotor and stator) of the actuator, or between devices (e.g. two different actuator controllers separated by a revolute joint). Advantageously, compact and internally integrated clocksprings provide a reliable mechanism for harness transmission without compromising the aesthetic appeal of a product (e.g., the robot). Further, more efficient manufacturing can be accomplished using internally integrated clocksprings compared with processes that involve assembling wire bundles into actuators. As such, rapid manufacturing and servicing of a robot fleet can be achieved.

Additionally, in some embodiments, the disclosed systems and methods employ various materials for the internally integrated clockspring. In some embodiments, a flat flexible cable (FFC) can be utilized by the clockspring such that the clockspring can bend at desired angles. Additionally and/or optionally, a flexible circuit (e.g., flex printed circuit(FPC)) can be utilized to enable more complex circuit trace and shielding geometries (e.g., zigzag patterns, wave patterns, or the like). Such a configuration allows for more accurate impedance matching or control between the circuits in the clockspring.

In some embodiments, one or more sensors can be further embedded or integrated with a clockspring to facilitate various operations. For example, a magnet in a clockspring disposed within an actuator may allow a controller on a stator to sense positional changes of a rotor as the rotor rotates.

Typically, clocksprings can be used to transmit electric signals between a steering wheel and a steering column in passenger vehicles. A clockspring may function by coiling and uncoiling a cable that is fixed to moving components of the vehicle. This mechanism allows for the transmission of power and signals through the rotational movement of the steering wheel, ensuring continuous electrical connectivity. However, traditional clocksprings are bulky in size or geometry, and may be ill-suited for compact or internal integration into an assembly (e.g., an actuator of a robot) to transmit signals. For example, it may not be feasible to integrate a traditional steering wheel clockspring inside a rotary actuator that is of the size of a human joint for signal transmission.

Although wire bundles can be integrated into an assembly for transmitting electrical signals, such uses of wire bundles may suffer from various drawbacks. For example, due to the presence of comparatively high mechanical stresses and their often-stochastic geometrical arrangement, dynamic round wire bundle segments that are used in liftgates or door hinges usually fail to function properly when operating under much lower rotations per minute (RPMs) compared to clocksprings. Further, integration of wire bundles into a device (e.g., a robot, a vehicle) may make the device less suitable for efficient mass production. For example, the assembly process for some robots may involve passing long wire bundles internally through a center of an actuator until the wire bundles are attached to target components. Such an assembly process can be imprecise, cumbersome, and tedious, and may frustrate efficient manufacturing and mass production.

To offer the advantage of less limited rotation at higher RPMs, slip rings that utilize brushes or sliding spring contacts for signal transmission across rotating joints may be employed. Yet, slip rings are significantly more expensive than clocksprings. As such, the advantages (e.g., less limited or unlimited rotation range) offered by slip rings may not justify the significantly increased BOM cost in applications where those features are not needed (e.g. robotic arms or humanoid robots where unlimited joint rotations are redundant).

To address at least a portion of the above problems, some embodiments of the present disclosure disclose mechanisms and assemblies that utilize a clockspring with reconfigured geometry suitable for fitting into existing empty spaces inside one or more components of a device (e.g., a robotic actuator or joint; vehicle door or liftgate hinge) to transmit electrical signals and/or power. In some embodiments, the geometry of the clockspring can be reconfigured so as to allow the clockspring to be integrated into a rotary actuator. By reconfiguring the clockspring's geometry and utilizing the often-hollow packaging space inside a motor's rotor and stator, an internally integrated mechanism for transmitting electrical signals between the fixed and rotating portions of the actuator is achieved. These electrical signals can enable continuous communication between components of the actuator, such as a motor controller mounted to the stator and a sensor mounted to the rotor, or to other components downstream of the actuator.

Advantageously, the reconfigured clockspring can be particularly useful in fields such as robotics applications, where the reconfigured clockspring can replace external dynamic cable segments across many of the robot's rotary actuator joints. Utilizing the reconfigured clockspring, the risk of cables getting entangled on surrounding objects or getting damaged during a fall of the robot is reduced. Additionally, the aesthetic appearance of the robot is improved by minimizing external cables. Further, in some embodiments, the connection of multiple actuators in series to form a robotic limb can be accomplished without the need for a wiring harness. Further, more efficient manufacturing can be accomplished using an internally integrated clockspring compared with processes that involve assembling wire bundles into actuators. As such, rapid manufacturing and servicing of a robot fleet can be achieved.

As noted above, in some embodiments, a flat flexible cable (FFC) can be utilized by the clockspring such that the clockspring can bend at desired angles. Additionally and/or optionally, flexible circuits (e.g., flex printed circuit (FPC)) can be utilized to enable more complex circuit trace and shielding geometries (e.g., zigzag patterns, wave patterns, or the like). The finely configured FPC traces can also be used to facilitate more accurate impedance matching or control between the circuits in the clockspring. In some embodiments, one or more sensors can be further embedded or integrated with the clockspring to facilitate various operations. For example, a magnet may be integrated with a clockspring that is disposed within an actuator such that a controller on a stator can sense positional changes of a rotor as the rotor rotates.

Although the various aspects will be described in accordance with illustrative embodiments and combination of features, one skilled in the relevant art will appreciate that the examples and combination of features are illustrative in nature and should not be construed as limiting. More specifically, aspects of the present application may be applicable with various types of devices under different contexts, such as when integrated into actuators of a robot, automotive door hinges, or generic revolute joints. Still further, although specific architectures of actuator interfaces or assemblies for utilizing the clockspring for electrical transmission will be described, such illustrative actuator interfaces or assembly architecture should not be construed as limiting. Accordingly, one skilled in the relevant art will appreciate that the aspects of the present application are not necessarily limited to application to any particular types of actuator assemblies, actuator assemblies infrastructure or illustrative interactions between moving or fixed components of actuators or other devices.

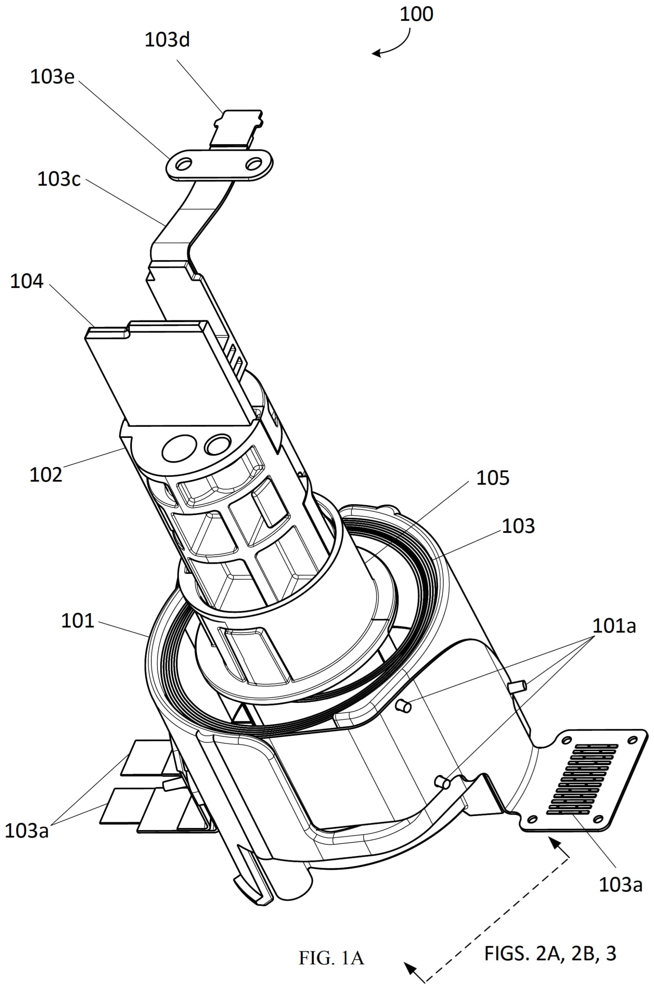

FIG. 1A illustrates a perspective view of an example clockspring assembly 100 according to some embodiments of the present disclosure. As shown in FIG. 1A, the clockspring assembly 100 includes a clockspring 103, an outer housing 101, an inner column 102, a paddle card 104, and a clip 105. In some embodiments, the outer housing 101 includes heat stakes 101a. In some embodiments, the clockspring 103 includes exposed traces 103a, a branch 103c, and stiffeners 103d and 103e.

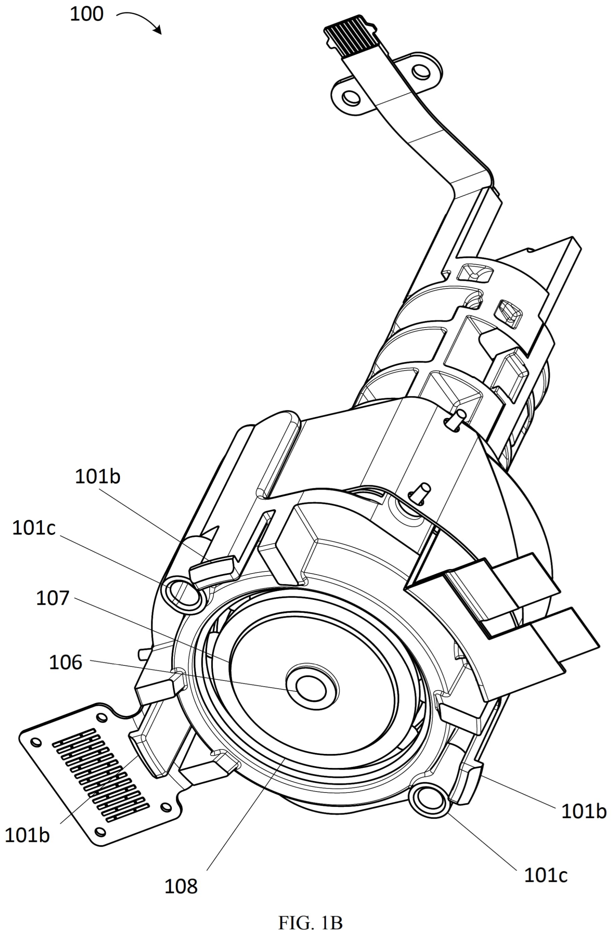

FIG. 1B illustrates another perspective view of the example clockspring assembly 100 according to some embodiments of the present disclosure. As shown in FIG. 1B, in some embodiments, the clockspring assembly 100 includes a magnet 106, a retainer 107, and a bearing 108. In some embodiments, the outer housing 101 includes mounting tabs 101b and locating slots 101c.

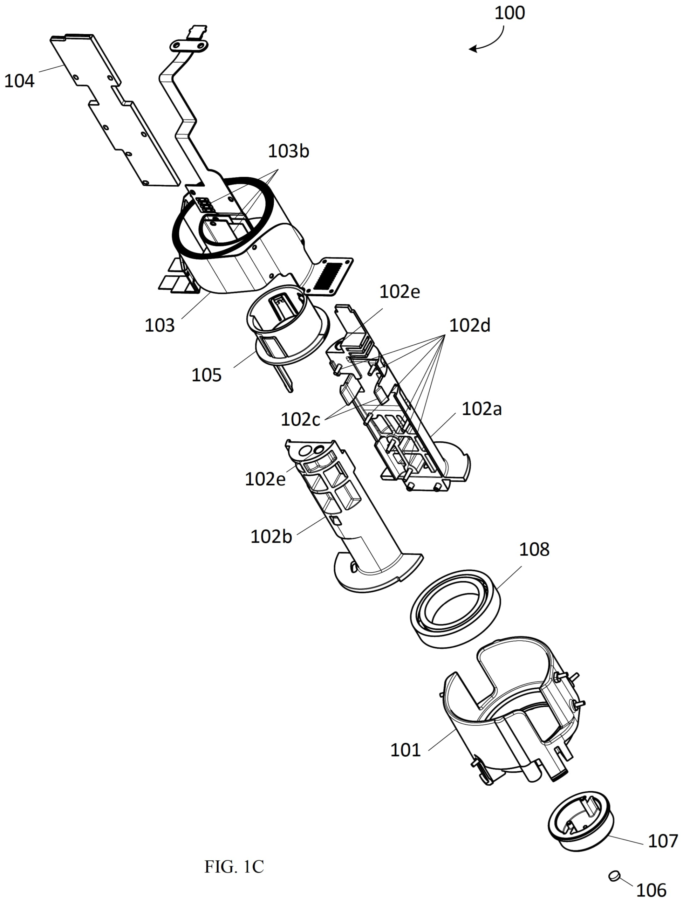

FIG. 1C illustrates an exploded view of the example clockspring assembly 100 according to some embodiments of the present disclosure. FIG. 1C shows the outer housing 101, the clockspring 103, the paddle card 104, the clip 105, the magnet 106, the retainer 107, and the bearing 108 shown in FIGS. 1A and 1B. The clockspring 103 includes the exposed traces 103b. In some embodiments, the inner column 102 includes a rear half 102a, a front half 102b, one or more attachment tabs 102c, one or more heat stakes 102d, and one or more locating slots 102e.

The clockspring 103 can be used for transmitting signals and/or power. In some embodiments, the clockspring 103 may be comprised of one or more flat cables with different functionalities. In the example clockspring assembly 100, a first cable is used for transmitting power (e.g., high current DC power), a second cable is the return ground for the first cable (e.g., high current DC ground), and a third cable is used for transmitting signals (e.g., electrical control signals). Each cable may consist of one or more conductors - interchangeably referred to as traces in the present disclosure - depending on usage requirements. The conductors may be shielded depending on the construction of the flat cable as a whole. In some embodiments, the clockspring 103 may include exposed traces 103a (shown in FIG. 1A) that can be used for electrical terminations through means such as hot bar soldering.

The ends of the dynamic portion of each cable in the clockspring 103 can be fixed to the outer housing 101 and inner column 102. In some embodiments, the clockspring cables may be mechanically constrained to the outer housing 101 and inner column 102 by a series of heat stakes 101a and 102d. In some embodiments, the outer housing 101 may include mounting tabs 101b and locating slots 101c (shown in FIG. 1B) for attaching and/or positioning the clockspring assembly 100 relative to surrounding components (e.g., a stator of a rotary actuator not shown in FIG. 1A).

The inner column 102 can be positioned within the outer housing 101. In some embodiments, the inner column 102 may include a rear half 102a and a front half 102b (shown in FIG. 1C) that are attached by attachment tabs 102c to sandwich the portion of the clockspring 103 that exits the inner column 102. In some embodiments, the inner column 102 may also include locating slots 102e for attaching and/or positioning of the clockspring assembly 100 relative to surrounding components (e.g., a rotor of a rotary actuator not shown in FIG. 1A). In some embodiments, the clip 105 can be used to further strain relieve the clockspring 103 as the clockspring 103 exits out of the inner column 102.

In some embodiments, an end of one or more cables in the clockspring 103 - in the example clockspring assembly 100, the signal flat cable mounted to the inner column - can be split into two portions, each with their own distinct termination methods. One portion that includes the exposed traces 103b (shown in FIG. 1C) can be hot bar soldered to a paddle card 104. The paddle card 104 can be further connected to an edge card-style connector that is external to the rotary actuator. The other portion can branch off through the branch 103c into exposed traces that are glued to the rigid stiffener 103d. In some embodiments, the stiffener 103d can interface with a zero insertion force (ZIF) style connector located on a sensor PCBA internal to the actuator rotor. In some embodiments, a rigid stiffener 103e that has bolt holes can be glued to the branch 103c to help provide strain relief for the ZIF connection.

In some embodiments, the magnet 106 can be used for precise position sensing of the inner column 102 relative to the outer housing 101. In some embodiments, the retainer 107 is sized and shaped to precisely locate the magnet 106 relative to the inner column 102. In some embodiments, the bearing 108 may be press-fit between the retainer 107 and the outer housing 101 to maintain concentricity and ensure smooth rotational movement of the clockspring assembly 100.

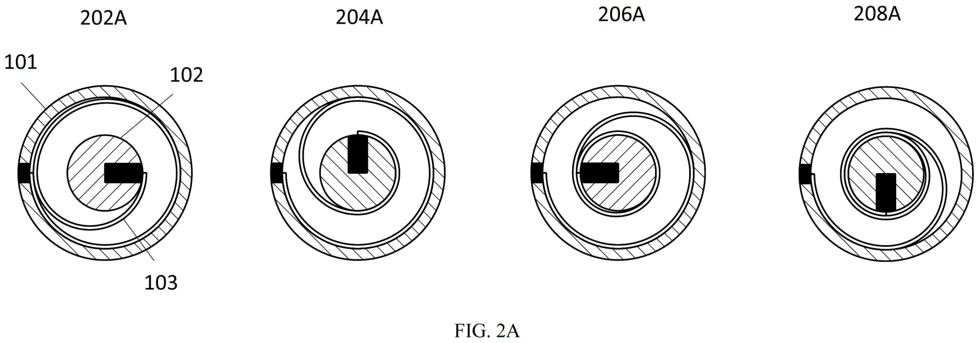

FIG. 2A illustrates an example packaging associated with the clockspring 103, the inner column 102, and the outer housing 101 according to some embodiments of the present disclosure. More specifically, FIG. 2A shows movement of the clockspring 103 that is implemented by a single flat cable as the inner column 102 rotates relative to the outer housing 101 by increments of 90 degrees. In some embodiments, the outer housing 101 can be mounted to or can be a part of a stator, and the inner column 102 can be mounted to or be a part of a rotor.

At position 202A, the inner column 102 may be at an initial position, where the clockspring 103 is coiled in a certain configuration within the outer housing 101.

At position 204A, the inner column 102 has rotated by 90 degrees counterclockwise from the position 202A to reach the position 204A. The rotation of the inner column 102 causes the clockspring 103 to coil and/or shift within the outer housing 101.

At position 206A, the inner column 102 has rotated by 90 degrees counterclockwise from the position 204A to reach the position 206A. The rotation of the inner column 102 further causes the clockspring 103 to coil and/or shift within the outer housing 101.

At position 208A, the inner column 102 has rotated by 90 degrees counterclockwise from the position 206A to reach the position 208A. The rotation of the inner column 102 further causes the clockspring 103 to coil and/or shift within the outer housing 101.

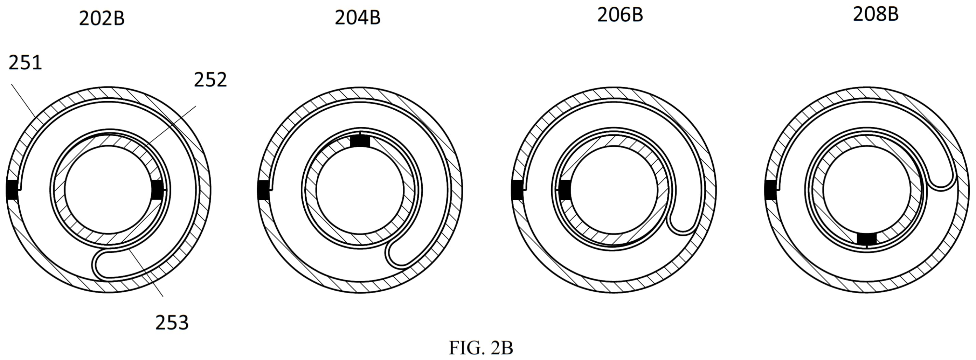

FIG. 2B illustrates example movements associated with a conventional clockspring assembly that includes a clockspring 253, an outer housing 251, and an inner column 252. More specifically, FIG. 2B illustrates the toroidal form factor taken by the clockspring 253 and associated assembly.

At position 202B, the inner column 102 may be at an initial position, where the clockspring 103 is coiled in a certain configuration within the outer housing 101.

At position 204B, the inner column 102 has rotated by 90 degrees counterclockwise from the position 202B to reach the position 204B. The rotation of the inner column 102 causes the clockspring 103 to coil and/or shift within the outer housing 101.

At position 206B, the inner column 102 has rotated by 90 degrees counterclockwise from the position 204B to reach the position 206B. The rotation of the inner column 102 further causes the clockspring 103 to coil and/or shift within the outer housing 101.

At position 208B, the inner column 102 has rotated by 90 degrees counterclockwise from the position 206B to reach the position 208B. The rotation of the inner column 102 further causes the clockspring 103 to coil and/or shift within the outer housing 101.

In contrast to the toroidal form factor used by the clockspring 253 of FIG. 2B, the clockspring 103 of the clockspring assembly 100 is configured inside an inner diameter of the outer housing 101 in a compact manner illustrated in FIG. 2A. Compared with the clockspring 253 of FIG. 2B, the implementation of FIG. 2A may effectively reduce packaging space and increase the dynamic bend radius of the clockspring 103.

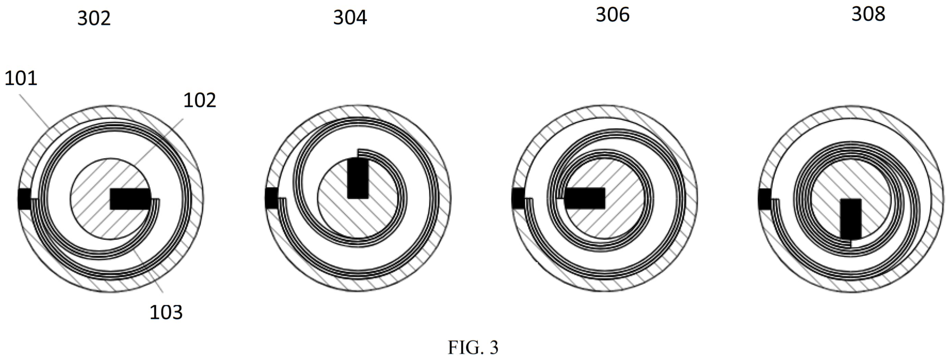

FIG. 3 illustrates another example of packaging associated with the clockspring 103, the inner column 102, and the outer housing 101 according to some embodiments of the present disclosure. The implementation shown in FIG. 3 can be similar or the same as those of FIG. 2A, except that the clockspring 103 shown in FIG. 3 include multiple flat cables stacked together. FIG. 3 illustrates that the inner column 102 may rotate between the position 302, the position 304, the position 306, and the position 308 to cause the clockspring 103 coil and/or shift within the outer housing 101.

As shown in FIGS. 2A and FIG. 3, continuous electrical connections can be maintained between a rotating portion of an actuator assembly and a fixed portion of the actuator assembly through the clockspring 103 when the rotating portion moves relative to the fixed portion. For example, as noted above, FIG. 2A illustrates the changing geometry of the clockspring 103 as the inner column 102 continuously rotates through the various positions 202A, 204A, 206A, and 208A. As the inner column 102 rotates, the rotation of the inner column 102 causes the clockspring 103 to either coil tighter or uncoil, depending on the direction of rotation. The flexible nature of the clockspring 103 may enable the clockspring 103 to bend, twist, coil, and/or uncoil without breaking. As such, the continuous electrical connections between the inner column 102 and the outer housing 101 may remain intact while the clockspring 103 changes positions. Hard stops may be implemented to limit the range of motion between the outer housing 101 and inner column 102 to prevent excessive tension or buckling of the clockspring 103.

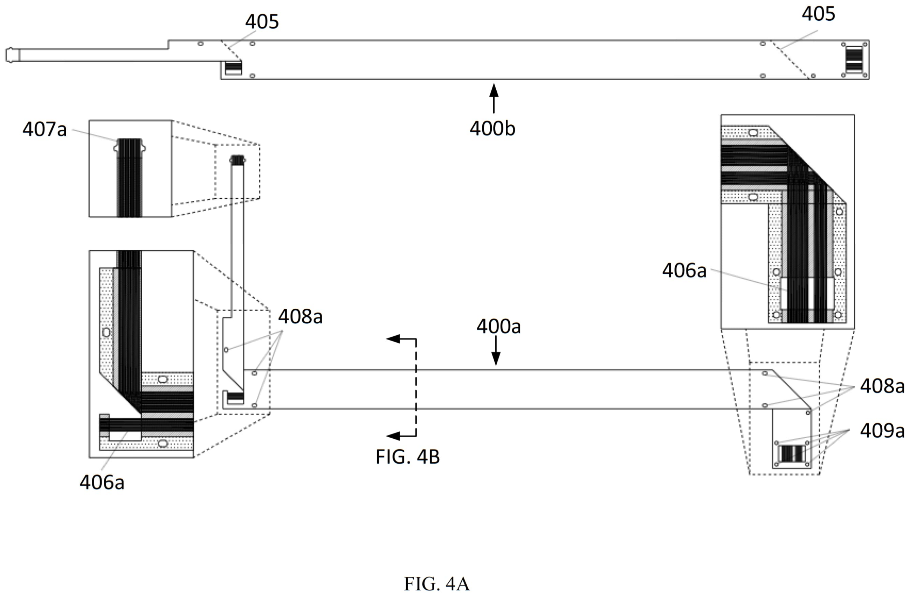

FIG. 4A illustrates an implementation of a single flat cable of the clockspring 103 as a flat flexible cable (FFC) 400a. In some embodiments, the FFC used to make the clockspring 103 may consist of multiple straight extruded conductor strips laminated between layers of insulation film, providing both electrical connectivity and mechanical durability. The straight FFC may then be folded into its final shape in accordance with the geometrical requirements of the clockspring assembly. FIG. 4A shows the example FFC in both a folded state 400a and an unfolded state 400b. Several detailed views show zones of interest with top insulation and shielding layers removed.

As shown in FIG. 4A, in some embodiments, the flat cable 400a includes one or more folding lines 405, one or more exposed traces 406a, one or more exposed traces 407a, one or more holes 408a, and/or one or more holes 409a. In some embodiments, the flat cable 400a is folded about the folding lines 405. In some embodiments, the traces 406a can be used for soldered termination, while in some embodiments the traces 407a can be used for ZIF connector termination. In some embodiments, the holes 408a can be used for mounting heat stakes (e.g., heat stakes 102d). In some embodiments, the holes 409a can be used for aligning the flat cable 400a during termination soldering.

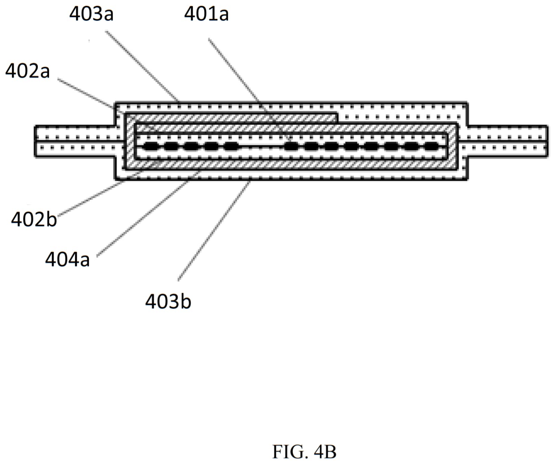

FIG. 4B shows a cross-sectional view of a portion of the flat cable 400a. In some embodiments, the clockspring 103 includes one or more conductor strips 401a, one or more inner insulation film layers 402a and 402b, one or more outer insulation film layers 403a and 403b, and an optional adhesive-lined metallic foil 404a. In some embodiments, the conductor strips 401a are laminated between the inner insulation film layers 402a and 402b. The optional adhesive-lined metallic foil 404a can be wrapped around the outer insulation film layers 403a and 403b to shield the conductor strips 401a, thereby allowing for electromagnetic interference (EMI) protection and/or improved impedance matching among the conductor strips 401a. For shield termination, the shielding film may be electrically grounded to designated conductor strips through holes in the insulation film layers 402a and 402b (not shown in FIGS. 4A and 4B), effectively utilizing those conductor strips as drain wires. The outer insulation film layers 403a and 403b may provide further protection of the conductor strips 401a and shield 404a.

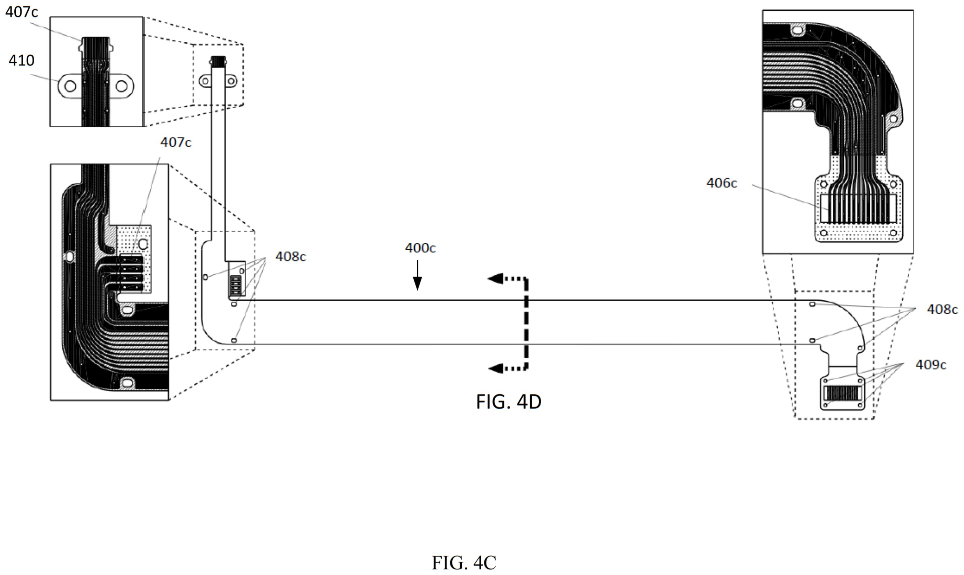

FIG. 4C illustrates an implementation of a single flat cable of the clockspring 103 as a flexible printed circuit (FPC) 400c. In some embodiments, the FPC 400c used to make the clockspring 103 may consist of etched conductor traces laminated between layers of insulation film, providing both electrical connectivity and mechanical durability. Several detail views show zones of interest with top insulation and shielding layers removed. As shown in FIG. 4C, the flat cable 400c includes one or more exposed traces 406c, one or more exposed traces 407c, one or more holes 408c, and/or one or more holes 409c. In some embodiments, the traces 406c can be used for soldered termination, while the traces 407c can be used for ZIF connector termination. In some embodiments, the holes 408c can be used for mounting heat stakes (e.g., heat stakes 102d). In some embodiments, the holes 409c can be used for aligning the flat cable 400c during termination soldering.

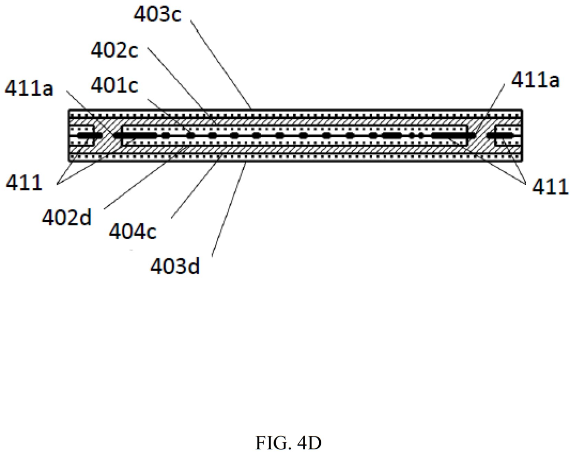

FIG. 4D shows a cross-sectional view of a portion of the flat cable 400c. In some embodiments, the clockspring 103 includes one or more conductor traces 401c, one or more inner insulation film layers 402c and 402c, one or more outer insulation film layers 403c and 403d, optional conductive ink 404c, shield traces 411, and grounding vias 411a. In some embodiments, the conductor traces 401c are laminated between the inner insulation film layers 402c and 402d. The optional conductive ink 404c is deposited over the inner insulation film layers 402c and 402d and grounded to shield traces 411 through vias 411a to achieve 360-degree shielding of the conductor traces 401c, therefore allowing for electromagnetic interference (EMI) protection and/or improved impedance matching among the conductor traces 401c. For shield termination, the shield traces 411 may be terminated in the same manner as the conductor traces 401c. The outer insulation film layers 403c and 403d may provide further protection of the conductor traces 401c and conductive ink 404c.

The two-dimensionally etched conductor traces 401c in the FPC 400c allow for more complex geometries as compared to the one-dimensionally extruded conductor strips 401a in the FFC 400a. Finer control over conductor width and pitch or even zigzag patterns, wave patterns, or the like can allow for more accurate impedance matching between traces where necessary. Enlarged pads at exposed areas (e.g. exposed traces 407c shown in FIG. 4C) can allow for more robust terminations. Finally, due to the different manufacturing methods between the two implementations, the FPC 400c advantageously does not require the folds 405 present in the flat cable 400a (e.g., flat flexible cable (FFC)) to achieve its final shape.

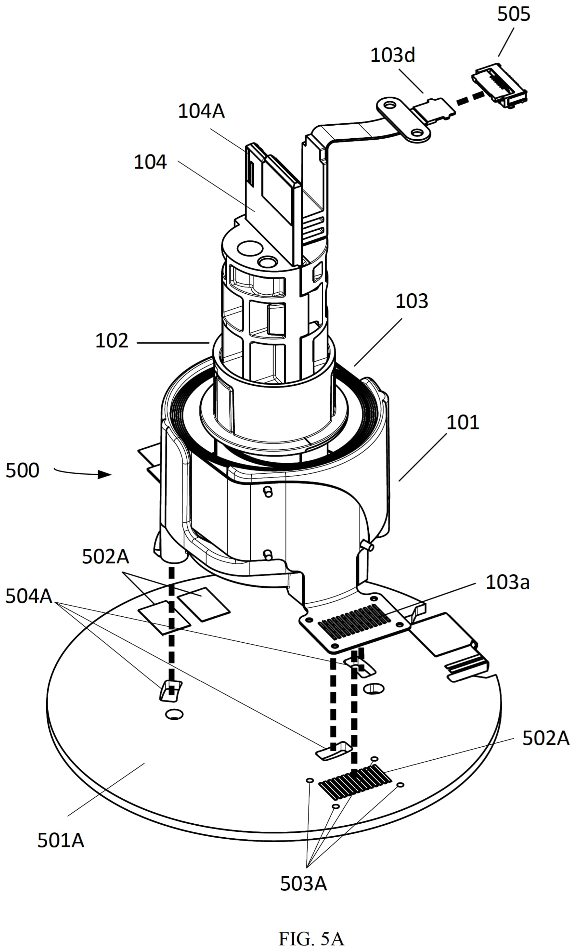

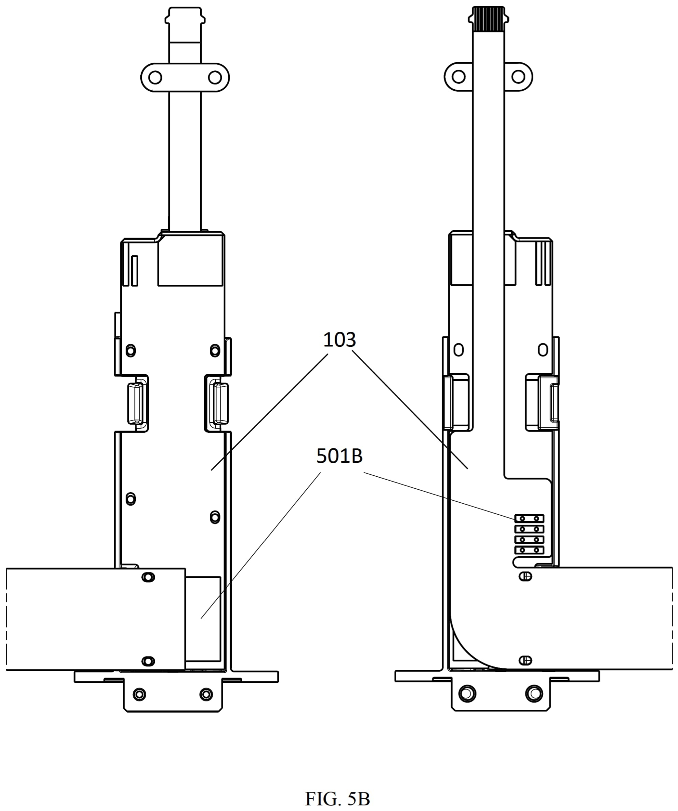

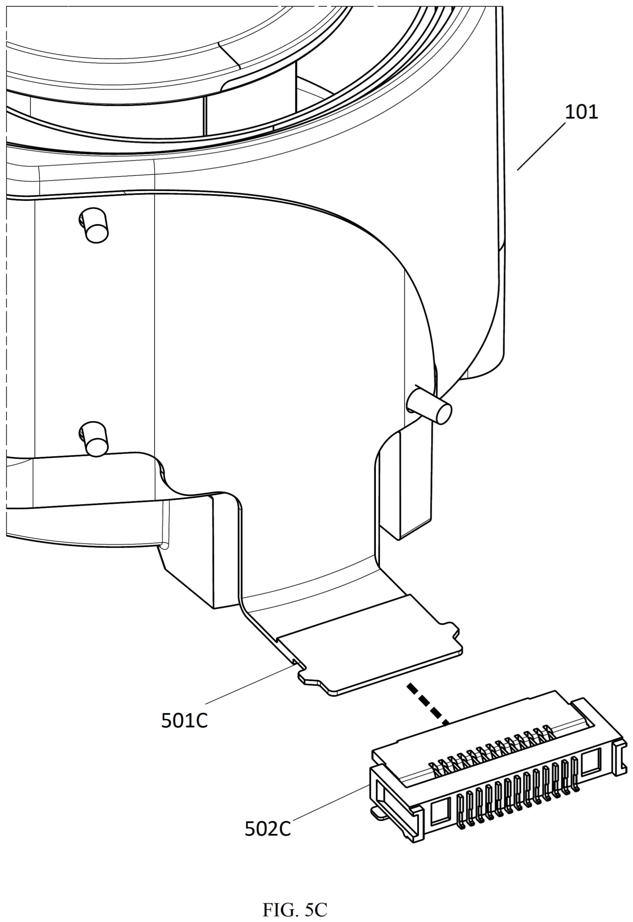

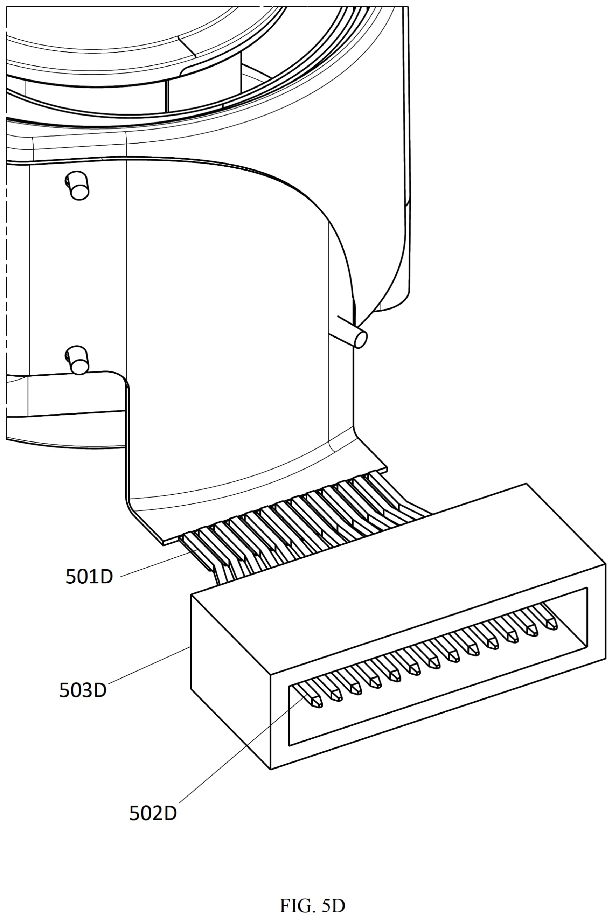

FIGS. 5A, 5B, 5C, and 5D illustrate example implementations for terminating a flat cable (e.g., the clockspring 103) of a clockspring assembly 500 according to some embodiments of the present disclosure. The clockspring assembly 500 can be the same as or similar to the clockspring assembly 100. More specifically, FIG. 5A shows a hybrid termination of the clockspring 103 through direct soldering to a PCBA (e.g. a motor controller), as well as the terminations of FIGS. 5B and 5C. FIG. 5B shows a direct soldering to a paddle card. FIG. 5C shows termination using a ZIF connector. FIG. 5D shows direct soldering or welding to connector terminals.

FIG. 5A shows a controller PCBA 501A that can be soldered to the clockspring 103 of the clockspring assembly 500. As shown in FIG. 5A, in some embodiments, the controller PCBA 501A includes solder pads 502A, alignment holes 503A, and mounting holes 504A. In some embodiments, the clockspring assembly 500 includes a paddle card 104 with exposed pads 104A and stiffener 103d meant for compatibility with a ZIF connector 505. In some embodiments, the controller PCBA 501A provides motor control and power distribution functionalities for a rotary actuator. In some embodiments, the controller PCBA 501A may send or receive signals transmitted through the clockspring 103. In some embodiments, the solder pads 502A can be used for terminating the clockspring 103 to the surface of the controller PCBA 501A through methods such as hot bar soldering. In some embodiments, the alignment holes 503A can be used for aligning the clockspring 103 to the solder pads 502A during termination. In some embodiments, the mounting holes 504A can be used to mount the outer housing 101 to the controller PCBA 501A. In some embodiments, the paddle card 104 can be used for terminating the clockspring 103 on the inner column side, with the exposed pads 104A interfacing with an edge card connector. In some embodiments, the stiffener 103d serves as a rigid backing for exposed traces and may interface with a ZIF connector 505.

FIG. 5B shows solder pads 501B that can be used to directly solder the clockspring 103 to the paddle card PCB 104.

FIG. 5C shows a portion of the exposed traces 103a implemented instead as exposed traces backed by a rigid stiffener 501C. The stiffener 501C can be used for interfacing with the ZIF connector 502C, which in turn can be a component of a PCBA (e.g., the controller 501A).

FIG. 5D shows a portion of the exposed traces 103a implemented instead as exposed conductors 501D that are terminated to pins 502D and a housing 503D. In some embodiments, the conductors 501D may be soldered or welded to the pins 502D, which may be used for interfacing with a plug-style connector (not shown in FIG. 5D). The housing 503D may house the pins 502D to interface with the plug-style connector.

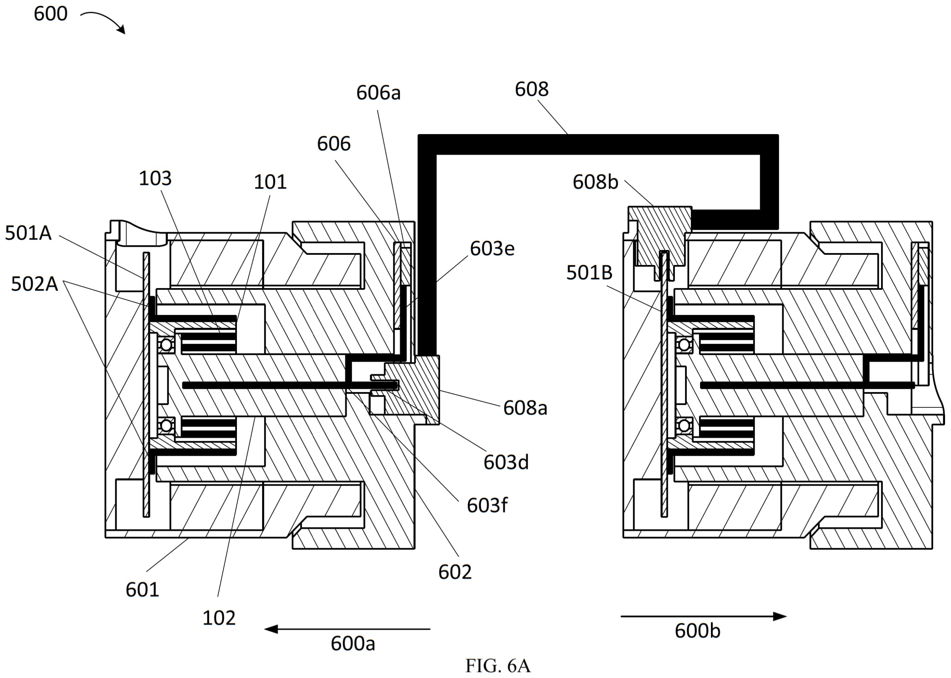

FIG. 6A shows a cross-sectional view illustrating an example system 600 that includes an actuator assembly 600a and an actuator assembly 600b. The system 600 may be a part of a robot. In some embodiments, the actuator assembly 600a and actuator assembly 600b can each be a rotary actuator. As shown in FIG. 6A, in some embodiments, the actuator assembly 600a includes the outer housing 101, the inner column 102, the clockspring 103, a clockspring branch 603d, a clockspring branch 603e, a clockspring junction 603f, the stator 601, the rotor 602, a controller 501A, solder pads 502A, a sensor 606, a sensor connector 606a, and/or a connector 608a. In some embodiments, the actuator assembly 600b includes at least a controller 607 and a connector 608b. The actuator assembly 600a and the actuator assembly 600b can be connected through a cable 608.

In some embodiments, the clockspring 103 is soldered or connected to the controller 501A (e.g., a controller PCBA) that is attached or mounted on the stator 601. The outer housing 101 is mechanically constrained to the stator 601 and the inner column 102 is mechanically constrained to the rotor 602. The clockspring 103 can be used to transmit electrical signals and power between the stator 601 and the rotor 602. The clockspring 103 can be soldered or connected to the controller 501A through the solder pads 502A (e.g., soldered joints). Based on signals and/or power received from the clockspring 103, the controller 501A may facilitate control functions and communication with other components or electronic devices (e.g., the actuator assembly 600b).

As shown in FIG. 6A, the controller 501A and at least a portion of the clockspring 103 can be housed within the stator 601 that may also house other components. The clockspring assembly 100 may be compactly integrated into the internal space of the actuator rotor 602 (which in many instances, is toroidal in shape), which may be a rotating portion of the actuator assembly 600a and may interface with the stator 601 and the clockspring 103. The clockspring branch 603d, clockspring branch 603e, and clockspring junction 603f can facilitate the distribution of signals and/or power transmitted by the clockspring 103 to various components within the system 600. In some embodiments, a connector 606a on the rotor-mounted sensor 606 can connect to the clockspring branch 603e, therefore facilitating communications between the sensor 606 and the motor controller 501A.

In some embodiments, the clockspring 103 can transmit signals and/or power to the actuator assembly 600b. More specifically, the clockspring 103 can transmit signals and/or power to the controller 607 of the actuator assembly 600b through the cable 608. The cable 608 may be a jumper cable. The cable 608 may be associated with connector 608a and the connector 608b for connecting the clockspring branch 603d of the actuator assembly 600a to the controller 607. Advantageously, such a connection may allow efficient communication and power transmission between the actuator assembly 600a and the actuator assembly 600b.

In some embodiments, the interface between the clockspring branch 603d exiting the rotor 602a and the connector 608a may be designated as an "output" connector. The interface between the controller 501A and the connector 608b which receives the circuits from the branch 603d may be designated as an "input" connector. In this nomenclature, the input connector is fixed relative to the stator while the output connector is fixed relative to the rotor. Using this nomenclature as applied to FIG. 6A, the output connector/rotor of actuator 600a is fixed relative to the input connector/stator of actuator 600b as to prevent dynamic movement in the jumper cable 608.

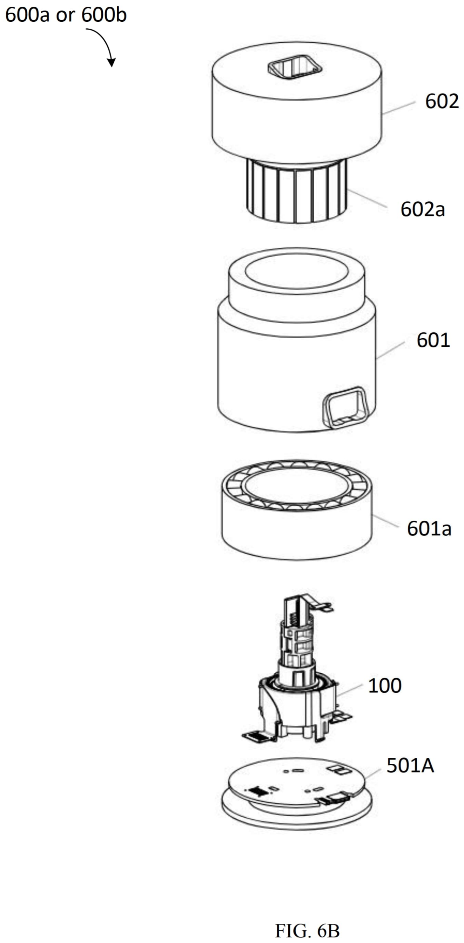

FIG. 6B shows an exploded view of one of the example actuator assemblies 600a or 600b in FIG. 6A. FIG. 6B includes the clockspring assembly 100, the stator 601 containing stator windings 601a, the rotor 602 containing rotor magnets 602a, and the motor controller 501A. As illustrated in FIG. 6B, the rotor 602 is assembled around the clockspring assembly 100. The rotor magnets 602a in turn are concentrically oriented within the stator windings 601a, which along with the motor controller 501A, are housed within the stator 601. The motor controller 501A may provide power distribution and control functionalities to the stator windings 601a.

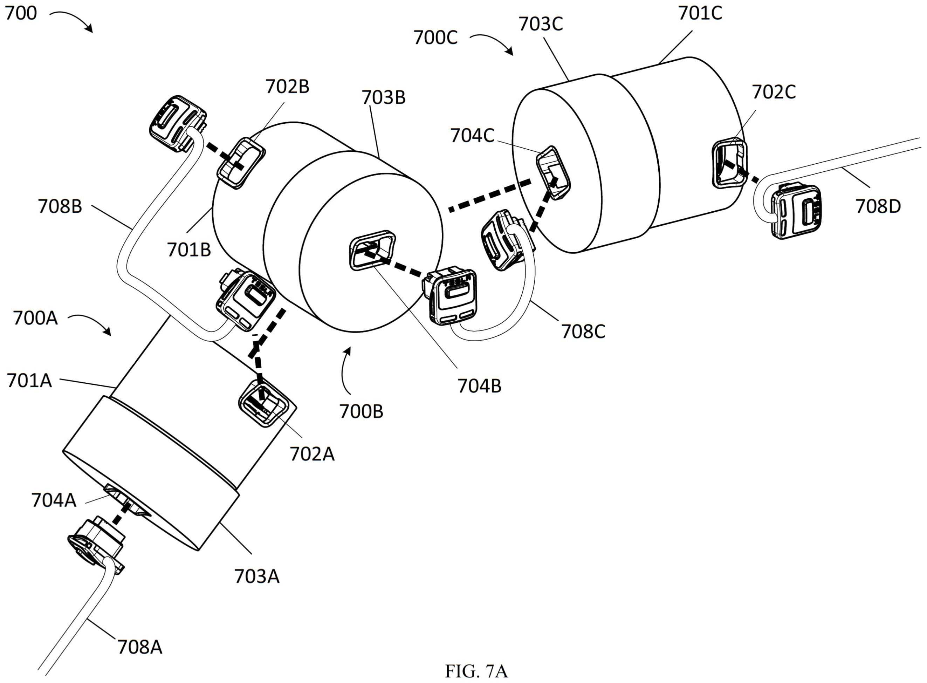

FIG. 7A shows an exploded view of an example system 700 that includes a first actuator assembly 700A, a second actuator assembly 700B, and a third actuator assembly 700C that can be electrically connected in series through cables or electrical wires. In some embodiments, the system 700 may be a part of a robotic limb. Each of the actuator assembly 700A, actuator assembly 700B, and actuator assembly 700C may be the same and or similar to the actuator assembly 600a and/or the actuator assembly 600b of FIG. 6A. As shown in FIG. 7A, the actuator assembly 700A includes a stator 701A, connector 702A, rotor 703A, and a connector 704A. The actuator assembly 700B includes a stator 701B, connector 702B, rotor 703B, and a connector 704B. The actuator assembly 700C includes a stator 701C, connector 702C, rotor 703C, and a connector 704C.

In some embodiments, the connector 702A can be an input connector (e.g., a stator side connector) of the actuator assembly 700A and the connector 704A can be an output connector (e.g., a rotor side connector) of the actuator assembly 700A. The connector 702B can be an input connector (e.g., a stator side connector) of the actuator assembly 700B and the connector 704B can be an output connector (e.g., a rotor side connector) of the actuator assembly 700B. The connector 702C can be an input connector (e.g., a stator side connector) of the actuator assembly 700C and the connector 704C can be an output connector (e.g., a rotor side connector) of the actuator assembly 700C.

As shown in FIG. 7A, the connector 704A can be connected to a power source, a signal source, and/or an external component (not shown in FIG. 7A) through a cable assembly 708A. The connector 702A can be connected to the connector 702B through a cable assembly 708B, thereby enabling power and/or signal transmission between the cable assembly 708A and the actuator assembly 700B through a clockspring (e.g., first clockspring) (hidden from view in FIG. 7A) deployed within the actuator assembly 700A. The connector 704B can be connected to the connector 704C through a cable assembly 708C, thereby enabling power and/or signal transmission between the actuator assembly 700A and the actuator assembly 700C through a clockspring (e.g., second clockspring) (hidden from view in FIG. 7A) deployed within the actuator assembly 700B. The connector 702C can be connected to a power source, a signal source, and or an external component (not shown in FIG. 7A) through a cable assembly 708D. Power and/or signal transmission between the actuator assembly 700B and the cable assembly 708D is enabled by a clockspring (e.g., third clockspring) (hidden from view in FIG. 7A) deployed within the actuator assembly 700C.

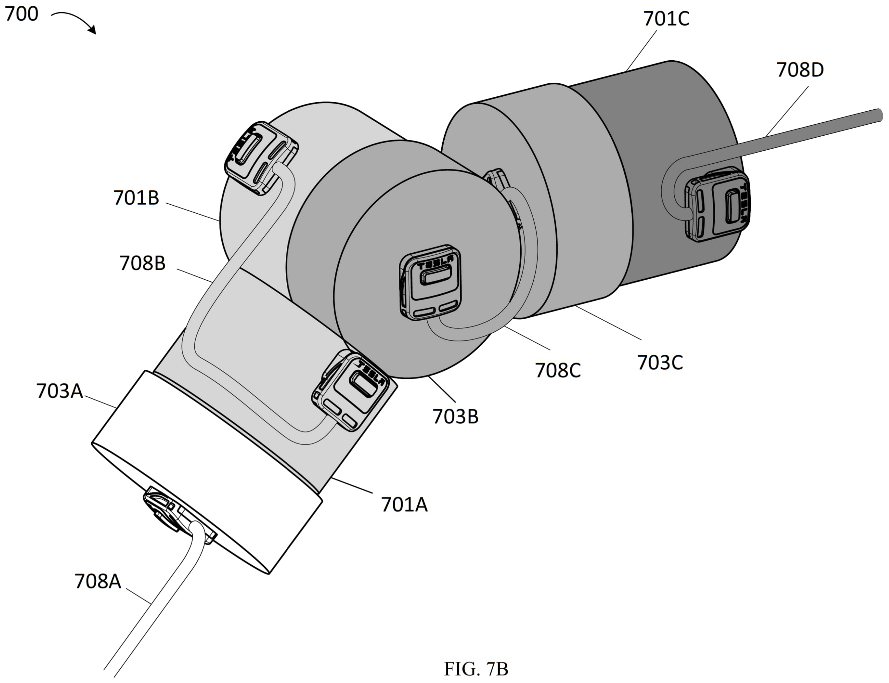

FIG. 7B shows a perspective view of the example system 700 in the assembled state. FIG. 7B shows the first actuator assembly 700A with stator 701A and rotor 703A, second actuator assembly 700B with stator 701B and rotor 703B, third actuator assembly 700C with stator 701C and rotor 703C, and cable assemblies 708A, 708B, 708C, and 708D. The rotor 703A of the first actuator assembly 700A and cable assembly 708A are assembled to form a first linkage. The stator 701A of the first actuator assembly 700A, stator 701B of the second actuator assembly 700B, and cable assembly 708B are assembled to form a second linkage. The rotor 703B of the second actuator assembly 700B, rotor 703C of the third actuator assembly 700C, and cable assembly 708C are assembled to form a third linkage. The stator 701C of the third actuator assembly 700C and cable assembly 708D are assembled to form a fourth linkage.

Advantageously, the system 700 may implement one or more motor controller architectures that allow components or electrical circuits (e.g., clocksprings, controller PCBAs, or the like) to be connected in series for effectuating signal and/or power transmission. In some embodiments, pass-through circuits associated with the clocksprings deployed within the system 700 may not be electrically biased, thereby enabling multiple (e.g., two) stators (input-to-input connection, as exemplified by the actuator assembly 700A and the actuator assembly 700B) or rotors (output-to-output connection, as exemplified by the actuator assembly 700B and the actuator assembly 700C) to be mounted to each other, rather than a strictly rotor-to-stator construction (output-to-input connection, as exemplified by the actuator assembly 600A and the actuator assembly 600B).

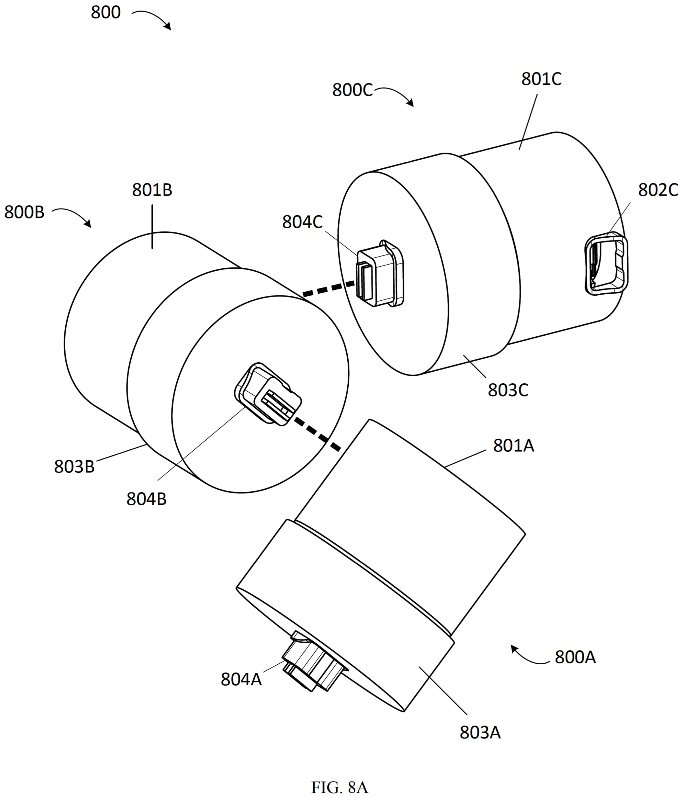

FIG. 8A shows an exploded view of an example system 800 that includes a first actuator assembly 800A with a stator 801A, rotor 803A, and connector 804A, a second actuator assembly 800B with a stator 801B, rotor 803B, and connector 804B, and a third actuator assembly 800C with a stator 801C, connector 802C, rotor 803C, and a connector 804C. In some embodiments, the system 800 may be part of a robotic limb. Each of the actuator assemblies 800A, 800B, and 800C may be similar to the assemblies 600A, 600B, 700A, 700B, and 700C, except for the fact that the output connector of one actuator can be directly connected to the input connector of another without the need of any additional cable assembly (the cable 608, the cable assemblies 708B and 708C).

As shown in FIG. 8A, the actuator assembly 800A may be connected to the actuator assembly 800B at least through the connector 804B (e.g., a rotor side or output side connector). The actuator assembly 800C may be connected to the actuator assembly 800B at least through the connector 804C (e.g., a rotor side or output side connector). Advantageously, the connectors 804A, 804B, 802C, and 804C may facilitate the transmission of electrical signals and power between actuator assemblies 800A, 800B, and 800C, thereby enabling coordinated movement and control within the system 800.

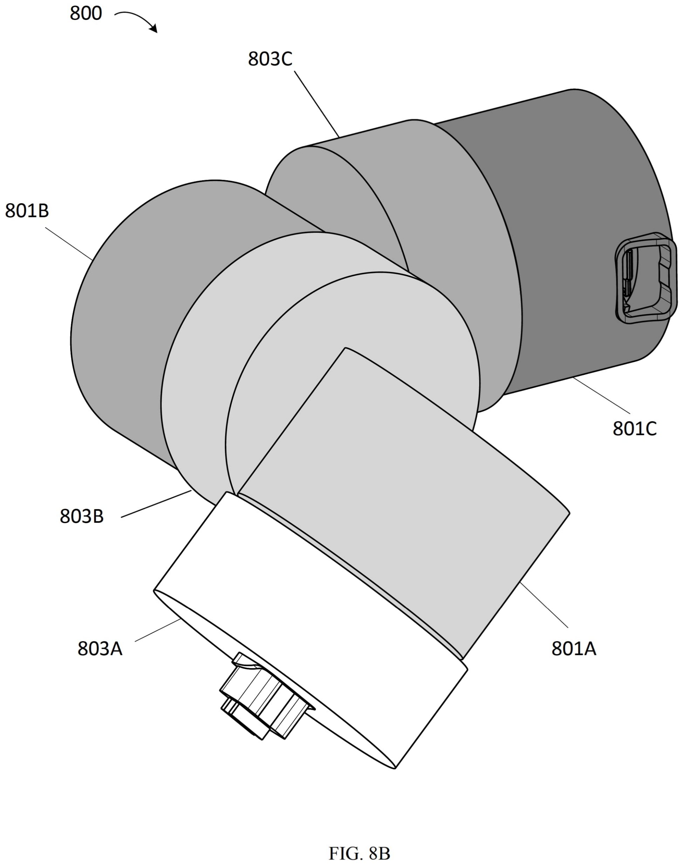

FIG. 8B shows a perspective view of the example system 800 in the assembled state. The rotor 803A of the first actuator assembly 800A forms a first linkage. The stator 801A of the first actuator assembly 800A and rotor 803B of the second actuator assembly 800B are assembled to form a second linkage. The stator 801B of the second actuator assembly 800B and rotor 803C of the third actuator assembly 800C are assembled to form a third linkage. The stator 801C of the third actuator assembly 800C forms a fourth linkage.

FIGS. 8A and 8B illustrate that the output sides of the clocksprings (hidden from view in FIGS. 8A and 8B) can be directly connected to a controller in a subsequent actuator assembly using pin-and-socket or edge card style connections. These connections may eliminate the need for any external cable harness (e.g., the cable 608, the cable assemblies 708B and 708C), which may simplify the connections and reduce BOM cost, manufacturing complexity, and potential points of failure.

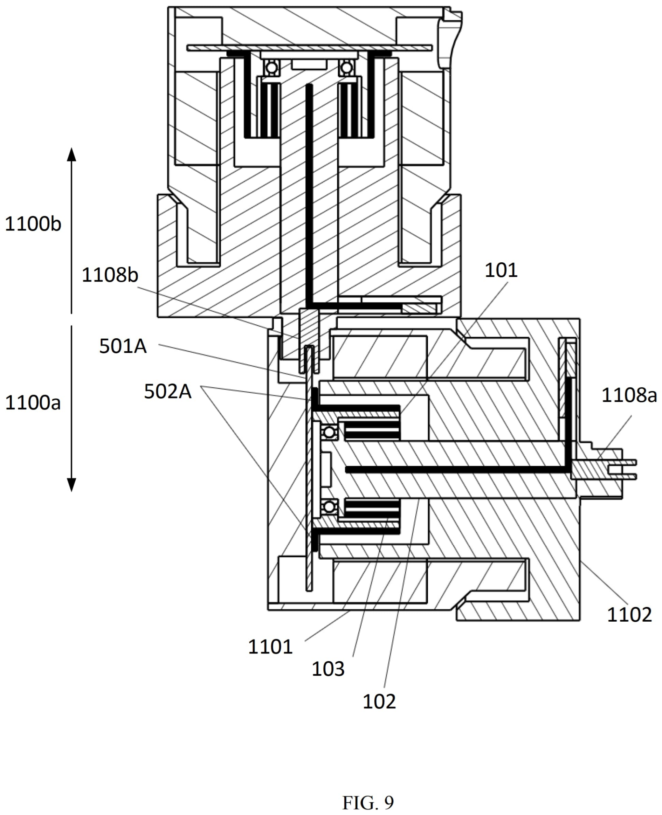

FIG. 9 shows a cross-sectional view of an example integration of an actuator assembly 1100a and an actuator assembly 1100b according to some embodiments of the present disclosure. The actuator assemblies 1100a and 1100b and their direct electrical interconnect strategy may be the same as or similar to the actuator assemblies 800A, 800B, and 800C in FIGS. 8A and 8B. As shown in FIG. 9, the actuator assembly 1100a includes a stator 1101, a rotor 1102, a controller 501A, solder pads 502A, connector 1108a, an outer housing 101, an inner column 102, and the clockspring 103. Unless otherwise noted, the components of FIG. 9 can be the same or generally similar to like-numbered components of FIG. 6A. The connector 1108b on the actuator assembly 1100b enables the actuator assembly 1100a and the actuator assembly 1100b to be directly connected (e.g., without using any cable harness) to each other. The connector 1108a may enable the actuator assembly 1100a to be directly connected to another actuator assembly (not shown in FIG. 9).

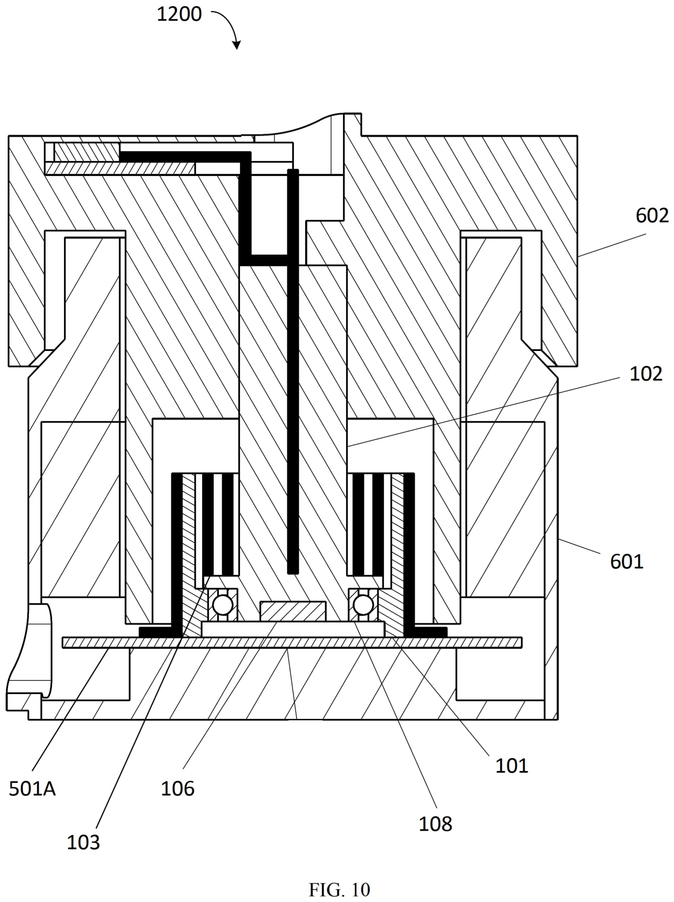

FIG. 10 shows a cross-sectional view of an actuator assembly 1200 that includes the clockspring assembly 100, the controller PCB 501A, the rotor 602, and the stator 601 according to some embodiments of the present disclosure. As shown in FIG. 10, the clockspring assembly 100 includes the outer housing 101, the inner column 102, the clockspring 103, the magnet 106, and the bearing 108. The inner column 102 is fixed to the rotor 602. FIG. 10 illustrates that the magnet 106 in conjunction with a magnetic sensor deployed in the controller PCBA 501A can be utilized to sense movement associated with the rotor 602, and consequently the inner column 102 to provide positional feedback of the rotor 602 to the controller 501A.

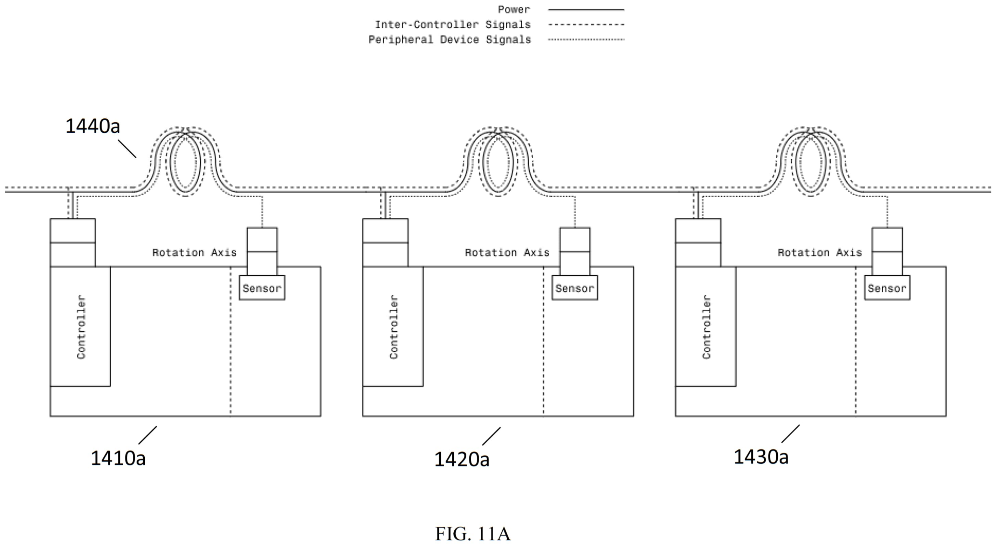

FIG. 11A depicts a block diagram representative of conventional electrical connections between actuator assemblies using an external wire harness. As shown in FIG. 11A, an actuator assembly 1410a, an actuator assembly 1420a, and an actuator assembly 1430a can be electrically connected through a wire harness 1440a that is external to the actuator assembly 1410a, the actuator assembly 1420a, and the actuator assembly 1430a. As illustrated in FIG. 11A, the wire harness 1440a can transmit various signals (e.g., power, inter-controller signals, peripheral device signals) among components (e.g., controllers and/or sensors) associated with the actuator assembly 1410a, the actuator assembly 1420a, and the actuator assembly 1430a.

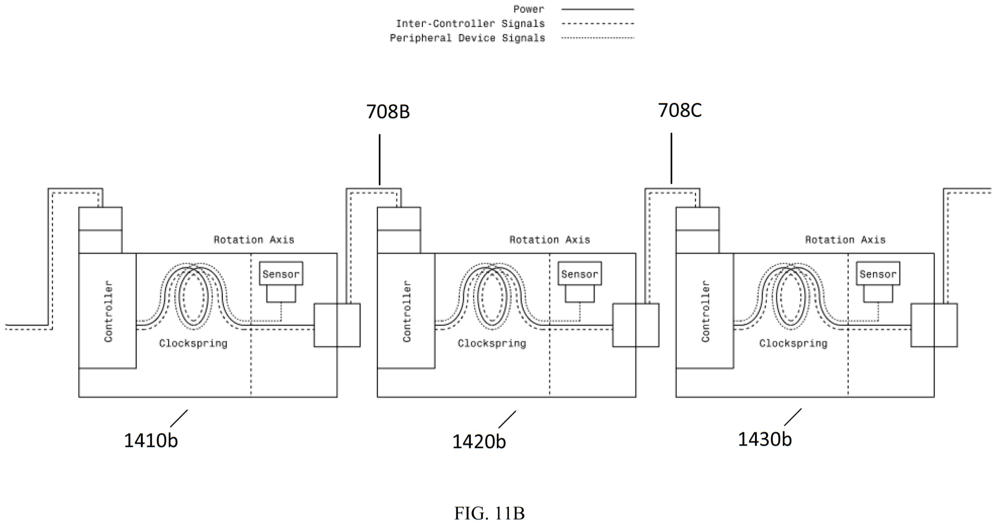

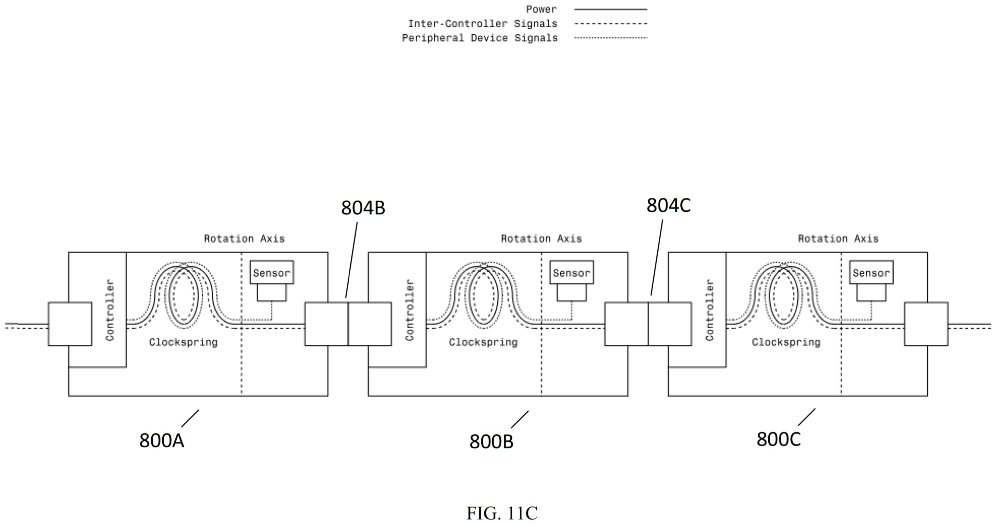

FIGS. 11B and 11C depict block diagrams representative of series connections between actuator assemblies (e.g., actuator assemblies that include the clockspring assembly 100) according to some embodiments of the present disclosure. FIG. 11B illustrates a block diagram representation of a system similar in architecture to the system 700 of FIGS. 7A and 7B. As shown in FIG. 11B, clocksprings (e.g., the clockspring 103) can be integrated within actuator assemblies 1410b, 1420b, and 1430b to transmit various signals (e.g., power, inter-controller signals, peripheral device signals). This is in contrast to the wire harness 1440a that is deployed external to the actuator assembly 1410a, the actuator assembly 1420a, and the actuator assembly 1430a. As illustrated in FIG. 11B, the cable assembly 708B and the cable assembly 708C are utilized to connect actuator assemblies of FIG. 11B.

FIG. 11C illustrates a block diagram representation of the system 800 of FIGS. 8A and 8B. The example implementation shown in FIG. 11C can be similar to that in FIG. 11B except that in FIG. 11C the jumper 708B and the jumper 708C are not utilized. Rather, the actuator assembly 800A, the actuator assembly 800B, and the actuator assembly 800C are connected with each other through direct inter-actuator connectors (e.g., the connector 804B and the connector 804C).

Advantageously, compared with the implementation of FIG. 11A, implementations of FIGS. 11B and 11C that integrate clocksprings (e.g., the clockspring 103) within actuator assemblies can provide a reliable mechanism for electrical signal transmission without compromising the aesthetic appeal of a product. Further, more efficient manufacturing can be accomplished using internally integrated clocksprings compared with processes that involve assembling wire bundles into actuators. As such, rapid manufacturing and servicing of a robot fleet can be achieved.

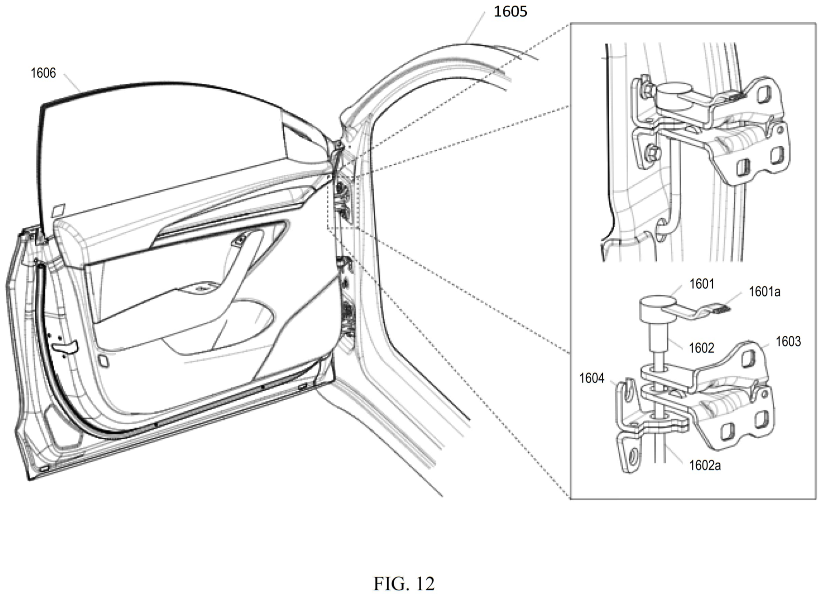

FIG. 12 shows an example application of a clockspring assembly in an automotive door hinge assembly. Included are a detail view and an exploded view highlighting the integration of the clockspring assembly with the door hinge assembly. As shown in FIG. 12, the clockspring assembly consists of an outer housing 1601, cable assembly 1601a, inner column 1602, and cable assembly 1602a. Also shown are a linkage 1603, linkage 1604, door ring 1605, and door 1606. The outer housing 1601 is fixed to the linkage 1603, which is in turn fixed to the door ring 1605. The inner column 1602 is fixed to the linkage 1604, which is in turn fixed to the door 1606. The dynamic clockspring (not shown in FIG. 12) is terminated on the input side to the static cable assembly 1601a, which exits the outer housing 1601 and transmits electrical circuits to the rest of the vehicle (not shown in FIG. 12). The clockspring is terminated on the output side to the static cable assembly 1602a, which exits the inner column 1602 and transmits electrical circuits to the door 1606. In some embodiments, the inner column 1602 may also serve as a structural pin between the linkages 1603 and 1604.

The example clocskpring assembly in FIG. 12 allows for the replacement of conventional means of electrical distribution to automotive doors, liftgates, and other hinged assemblies. Specifically, dynamic cable bundles often enclosed within a rubber grommet for mechanical and environmental protection can be substituted for a clockspring discretely packaged within the assembly hinge. Such an alternative can improve system reliability by better protecting electrical circuits from external damaging agents and reducing assembly mistakes associated with improper mechanical routing. Additionally, the aesthetic appearance of the vehicle and packaging space available for other components is improved.

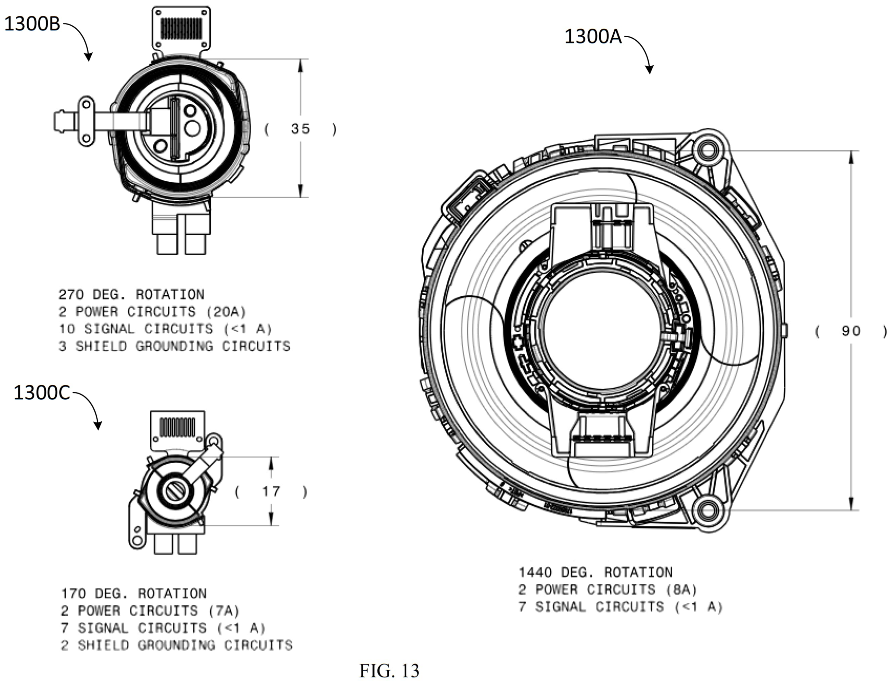

FIG. 13 depicts cross-sectional views of clockspring assemblies 1300A, 1300B, and 1300C according to some embodiments of the present disclosure. More specifically, the clockspring assembly 1300A illustrates an implementation of a conventional steering wheel clockspring assembly. The clockspring assemblies 1300B and 1300C can be the same or similar to the clockspring assembly 100.

As shown in FIG. 13, the clockspring assembly 1300A is larger in size than the clockspring assemblies 1300B and 1300C. For example, the clockspring assembly 1300A may have a diameter of about 90 millimeters (mm). In contrast, the clockspring assembly 1300B may have a diameter of about 35 mm, and the clockspring assembly 1300C may have a diameter of about 17 mm. In some embodiments, the clockspring assembly 1300B and the clockspring assembly 1300C may support a similar amount or higher amount of current compared with the clockspring assembly 1300A. For example, the clockspring assembly 1300B can support or supply 20 Amperes, the clockspring assembly 1300C can support 7 amperes, and the 1300A can support 8 Amperes. As a trade-off for size, the clockspring assemblies 1300B and 1300C may utilize a smaller range of motion than the clockspring assembly 1300A. For example, the clockspring assembly 1300A has a range of motion of 1440 degrees, the clockspring assembly 1300B has a range of motion of 270 degrees, and the clockspring assembly 1300C has a range of motion of 170 degrees.

Advantageously, compared with clockspring assembly 1300A, the clockspring assemblies 1300B and 1300C can be more compactly integrated into internal spaces in devices (e.g., a robotic actuator or joint; vehicle door or liftgate hinge), and can provide a reliable mechanism for harness transmission without compromising the aesthetic appeal of a product (e.g., the robot or vehicle).

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed display assemblies.

It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural. Further, various embodiments disclosed herein are to be taken in the illustrative and explanatory sense, and should in no way be construed as limiting of the present disclosure.

All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other. Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

The illustrative algorithms described in connection with the embodiments disclosed herein can be implemented as electronic hardware (e.g., ASICs or FPGA devices), computer software that runs on computer hardware, or combinations of both. Moreover, the various illustrative logical blocks and modules described in connection with the embodiments disclosed herein can be implemented or performed by a machine, such as a processor device, a digital signal processor ("DSP"), an application specific integrated circuit ("ASIC"), a field programmable gate array ("FPGA") or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the rendering techniques described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

It will also be appreciated that one or more of the elements depicted in the drawings/figures can also be implemented in a more separated or integrated manner, or even removed or rendered as inoperable in certain cases, as is useful in accordance with a particular application.

## Claims

1. An actuator assembly for a device, the actuator assembly comprising:
a rotating portion;
a fixed portion configured to interface with the rotating portion, wherein the fixed portion and the rotating portion structurally form a space that is at least partially surrounded by the fixed portion and the rotating portion; and
a clockspring configured to transmit at least an electrical power signal or a data signal from the rotating portion to the fixed portion, wherein the clockspring is sized and shaped to fit into the space.

2. The actuator assembly of claim 1, wherein the clockspring is made of one or more flat flexible cables (FFCs) or flexible circuits.

3. The actuator assembly of claim 1 or 2, wherein at least a portion of the clockspring has a cylindrical shape.

4. The actuator assembly of one of the preceding claims, wherein conductors in the clockspring are geometrically reconfigured or electrically shielded to facilitate impedance matching or electromagnetic interference (EMI) protection for electrical circuits in the clockspring.

5. The actuator assembly of one of the preceding claims, wherein the rotating portion is a rotor and the fixed portion is a stator.

6. The actuator assembly of one of the preceding claims, wherein the clockspring is concealed from view from outside the actuator assembly by the rotating portion and the fixed portion, and/or wherein the clockspring is electrically terminated to a motor controller inside the actuator assembly.

7. The actuator assembly of one of the preceding claims, further comprising:
a second device mounted on the rotating portion; and
a controller mounted on the fixed portion,
wherein a signal is generated by the second device, and wherein the clockspring transmits the signal from the second device to the controller.

8. The actuator assembly of one of the preceding claims, wherein the clockspring is configured to transmit the electrical power signal or the data signal from either the fixed portion or the rotating portion to another actuator assembly, and/or wherein the clockspring is electrically connected to a second actuator assembly through an intermediate pin-and-socket connection, an edge card connection, or a jumper wire.

9. The actuator assembly of one of the preceding claims, wherein the device is a robot, and wherein the actuator assembly forms a portion of a limb of the robot.

10. The actuator assembly of one of the preceding claims, wherein the clockspring is integrated in a hinge, and wherein the hinge attaches a door or a liftgate of a vehicle.

11. A method for signal or power transmission associated with an actuator or a revolute joint assembly that comprises a moving portion, a fixed portion, and a clockspring that is disposed between the moving portion and the fixed portion, the method comprising:
rotating the moving portion from a first to a second degree, wherein rotating the moving portion from the first to the second degree causes the clockspring to transition among continuous positions,
wherein the moving portion and the fixed portion are continuously electrically connected with each other through the clockspring when the clockspring transitions among the continuous positions.

12. The method of claim 11, wherein the clockspring transmits electrical power between the moving portion and the fixed portion when the clockspring transitions among the continuous positions.

13. The method of claim 11 or 12, further comprising:
attaching a magnet to the moving portion;
sensing a movement of the magnet to obtain positional data for a controller disposed on the fixed portion when the clockspring transitions between continuous positions; and
determining a position of the moving portion based on the positional data.

14. A first actuator assembly comprising:
a moving portion;
a fixed portion configured to interface with the moving portion, wherein the fixed portion and the moving portion structurally form a space that is at least partially surrounded by the fixed portion and the moving portion; and
a clockspring configured to transmit at least a signal between the moving portion and the fixed portion, wherein the clockspring is sized and shaped to fit into the space.

15. The first actuator assembly of claim 14, wherein the clockspring is concealed from view by the moving portion and the fixed portion, and/or wherein the clockspring is geometrically reconfigured to provide impedance matching between the moving portion and the fixed portion, and/or wherein the clockspring is connected to a second actuator assembly through a pin-and-socket connection, an edge card connection, or a jumper wire, preferably wherein the clockspring transmits the signal from the moving portion to the second actuator assembly through the pin-and-socket connection, the edge card connection, or the jumper wire.
